# EUROPEAN PATENT SPECIFICATION

(11) **EP 2 962 802 B1**
(45) Date of publication and mention of the grant of the patent: **01.03.2017**
(21) Application number: 14380019.1
(22) Date of filing: 04.07.2014
(51) Int. Cl.: B23K 26/38, B23K 26/03, G01B 11/16

(54) **LASER INSPECTION AND MACHINING HEAD**
LASERINSPEKTIONS- UND -BEARBEITUNGSKOPF
TÊTE D'INSPECTION ET D'USINAGE LASER

(43) Date of publication of application: 06.01.2016
(73) Proprietor: Ideko, S.Coop., 20870 Elgoibar Guipuzcoa (ES)
(72) Inventor: Mendikute Garate, Alberto, 20870 Elgoibar (Guipuzcoa) (ES); Urreta Prieto, Harkaitz, 20870 Elgoibar (Guipuzcoa) (ES); Ayesta Ereño, Igor, 20870 Elgoibar (Guipuzcoa) (ES)
(74) Representative: Cabinet Plasseraud

(56) References cited:
- WO-A2-2012/037694
- DE-A1-102004 053 298
- US-A- 5 339 152
- US-A1- 2013 175 243

## Description

### Field of the Art

The present invention relates to a laser and a machining head according to the preamble of claim 1 as shown for instance in DE102004053298A.

### State of the Art

The use of machining heads for machining by laser perforation in which a very high power photon beam is guided onto the piece to be machined is known for machining holes in elements such as for example, fuel injectors, printed electronic circuit boards, filters for fluids, etc.

The machining by boring technique is used in these laser perforation operations when diameters greater than the size of the focal point of the laser beam are to obtained, said technique consists of moving the laser beam to drive it in a circular path, such that only the cut of the profile of the hole is made, the portion of excess material remaining inside the cutting area being separated from the rest of the piece.

These laser cutting by boring processes require expensive equipment, CO₂ pulsed lasers or Nd-YAG pulsed lasers with a mean power in the order of 100 watts and power peaks up to 20 kilowatts commonly being used. Patents US6355907, US6444948, US7842901, and US20130175243 describe different solutions of laser cutting by boring heads.

On the other hand, once the piece has been machined, it must be driven to an independent inspection station for verifying the geometry of the machined piece, in addition to detecting defects such as cracks or burnt areas in said pieces which may cause non-compliance with required quality specifications.

To detect these defects, the use of holographic interferometry systems is known, whereby three-dimensional topographical images of the machined piece are obtained. These systems require using low-power laser emitting equipment in the order of 10 milliwatts, whereby a laser beam is projected onto the piece, illuminating it, and the reflected light being guided towards a digital camera to subsequently determine the existence of defects in the machined piece by means of specific software.

Therefore, the piece is machined in a machining station where a machining head using a high-power laser is arranged, and the piece is inspected in an inspection station where an inspection head using a low-power laser is arranged, which entails a high cost in the laser equipment used as well as production time loss in transporting the piece from the machining station to the inspection station.

The filter and printed circuit board (PCB) manufacturing process in which pieces having a planar surface up to one square meter and a thickness of 0.1 to 1 mm must be machined with up to a million holes is particularly relevant. By first performing machining and then inspection, if a defect is caused when machining the first holes, said defect will only be only detected later on in the inspection station, having to reject the piece in that case due to poor quality, or having to send it back to the machining station for repair, with the subsequent time loss this entails.

A head that allows machining and inspecting the piece in the same work station is therefore necessary, preventing time loss in transporting the piece, the need to use two independent laser emitters, and allowing inspecting the piece during the machining cycle.

### Object of the Invention

The present invention proposes a laser inspection and machining head incorporating a single laser emission source used alternatively for machining a workpiece by boring and inspecting a workpiece.

The laser inspection and machining head of the invention comprises:
- a laser emission source,
- regulating means for regulating the power of the laser emission source for switching alternatively between a first high-power laser beam and a second low-power laser beam,
- first guiding means for guiding the first high-power laser beam on the workpiece, and
- second guiding means for guiding the second low-power laser beam on the workpiece, the first high-power laser beam being used for machining the workpiece by boring, and the second low-power laser beam being used for inspecting the workpiece.

The first guiding means used for guiding the first high-power laser beam on the workpiece comprise:
- an adjustment block for guiding the first high-power laser beam emitted by the laser emission source,
- a beam rotator block rotatably mounted for guiding the first high-power laser beam according to a circular path, and
- a focusing optical block for focusing the first high-power laser beam on the workpiece.

Therefore, the adjustment block receives the first high-power laser beam emitted by the laser emission source and guides it towards the beam rotator block, which guides the first high-power laser beam towards the focusing optical block according to a circular path, which focuses same for machining the workpiece.

The second guiding means used for guiding the second low-power laser beam on the workpiece comprise:
- a power control and splitting block for splitting the second low-power laser beam into a reference beam and a target beam, and for adjusting the power of both reference beam and target beam,
- a receiving block for receiving the reference beam and the reflected target beam on the workpiece in the form of a reflected target beam,
- a beam splitting block for guiding the target beam towards the workpiece, and for guiding the reference beam and the reflected target beam towards the receiving block ,
- a first adaptation block for guiding the reference beam from the power control and splitting block to the receiving block,
- a second optical adaptation block for guiding the target beam from the power control and splitting block to the receiving block, and
- a third optical adaptation block for focusing the target beam on the workpiece.

The power control and splitting block therefore receives the second low-power laser beam emitted by the laser emission source and splits it into the reference beam and the target beam, each of these reference beam and target beam being adapted by means of their respective adaptation block and sent towards the beam splitting block which, on one hand, allows the reference beam to be directly guided to the receiving block, and in addition, allows the target beam to be guided towards the third optical adaptation block.

This third optical adaptation block focuses the target beam, illuminating the workpiece, the light illuminating the workpiece is reflected in the form of a reflected target beam which is guided to the receiving block through the beam splitting block, such that the reference beam and the reflected target beam reach the receiving block, these two beams interfering with one another to generate a holographic pattern which, by means of digital holography techniques, allows the topographical reconstruction of the machined area of the work surface.

It has been envisaged that the first and second guiding means are arranged in an upper position with respect to the workpiece, both guiding means having at least a horizontal translational movement for being alternatively located in an upper position substantially aligned with the workpiece. In that manner, when the first high-power laser beam is being used for machining the workpiece by boring, the first guiding means are moved so that they are located immediately above the workpiece, and the first high-power laser beam is guided onto it, whereas the second guiding means are moved so that they do not interfere with the first guiding means. Similarly, when the second low-power laser beam is being used for inspecting the workpiece, the second guiding means are moved so that they are located immediately above the workpiece and the second low-power laser beam is guided onto it, whereas the first guiding means are moved so as to not interfere with the second guiding means. It is also possible for the first and second guiding means to be fixed, in such case the workpiece presenting horizontal translational movement for being located alternatively below the first and second guiding means.

According to another embodiment of the invention, the first guiding means are located in an upper position with respect to the workpiece, and the second guiding means are located in a lower position with respect to the workpiece, such that the workpiece is machined from an upper position, and inspection is performed from a lower position, the need to have to move the first and second guiding means so that they do not interfere one another being prevented.

A simple, low-cost laser inspection and machining head which, by using a single laser emission source for machining and inspecting a piece in one and the same work station, prevents time loss used in transferring the workpiece between a machining station and an inspection station, and allows the piece to be inspected as machining takes place, being able to detect defects in the piece at the start of the machining cycle, is thus obtained.

### Description of the Drawings

Figure 1 shows a block diagram of the laser inspection and machining head according to an embodiment of the invention in which the first high-power laser beam guided on the workpiece by the first guiding means is shown.
Figure 1A shows another embodiment of the first guiding means guiding the first high-power laser beam guided on the workpiece.
Figure 2 shows the block diagram of the preceding figure in which the second low-power laser beam guided on the workpiece by the second guiding means is shown.
Figure 3 shows a block diagram of another embodiment of the laser inspection and machining head, in which the workpiece is machined from the upper part and the inspection is performed from the lower part.

### Detailed Description of the Invention

The laser inspection and machining head object of the present invention comprises a single laser emission source (1) which is used alternatively for machining a workpiece (2) by boring as well as subsequently inspecting the machined area of said workpiece (2), such that the workpiece (2) is machined and inspected by the same head using a single laser emission source (1), and in one and the same work station, without the need to transfer the piece between a machining station and an inspection station.

The laser inspection and machining head incorporates regulating means (3) which allow regulating the power of the laser emission source (1) for switching alternatively between a first high-power laser beam (4), which is used for machining the workpiece (2) by boring, and a second low-power laser beam (5), which is used for inspecting the workpiece (2).

For machining the workpiece (2) by boring, the first high-power laser beam (4) is adjusted to an power in the order of between 25 watts and 1000 watts, whereas for inspecting the workpiece (2), the second low-power laser beam (5) is adjusted to a power in the order of 0.01% of the power of the first laser beam, between 10 milliwatts and 50 milliwatts. The laser emission source (1) can consist of a CO² laser, an Nd:Yag laser, or optical fiber.

As can be seen in the drawings, the laser inspection and machining head incorporates first guiding means (6) for guiding the first high-power laser beam (4) with which the workpiece (2) is machined, and second guiding means (7) for guiding the second low-power laser beam (5) with which the already machined workpiece (2) is inspected.

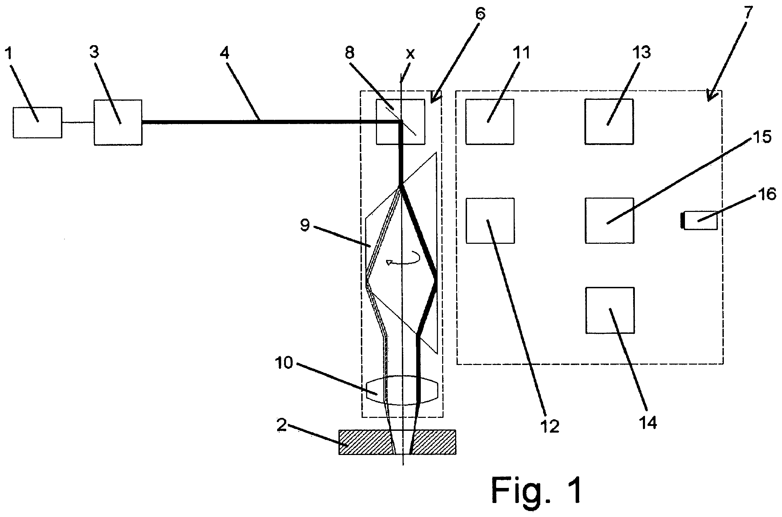

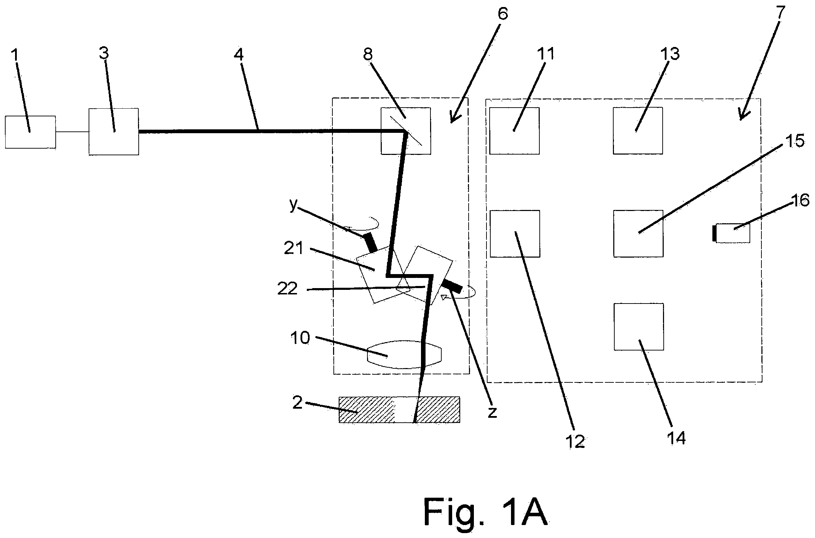

The embodiment of Figure 1 shows the laser emission source (1) emitting the first high-power laser beam (4), indicated by a thick line, which is guided by the first guiding means (6) onto the surface of the workpiece (2). These first guiding means (6) are formed by a set of optical elements guiding the first high-power laser beam (4) onto the surface of the workpiece (2) according to a circular path.

As can be seen in the drawings, the set of optical elements of the first guiding means (6) comprise an adjustment block (8), a beam rotator block (9) and a focusing optical block (10).

The adjustment block (8) is used for guiding the first high-power laser beam (4) emitted by the laser emission source (1) towards the beam rotator block (9). The adjustment block (8) can consist of a mirror or sets of mirrors that can be rotated or inclined for modifying the direction of the first high-power laser beam (4), reflecting it in the direction of the beam rotator (9).

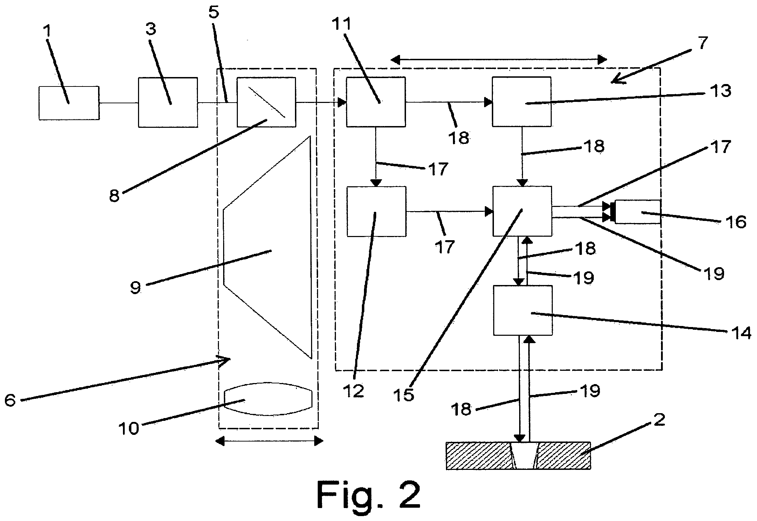

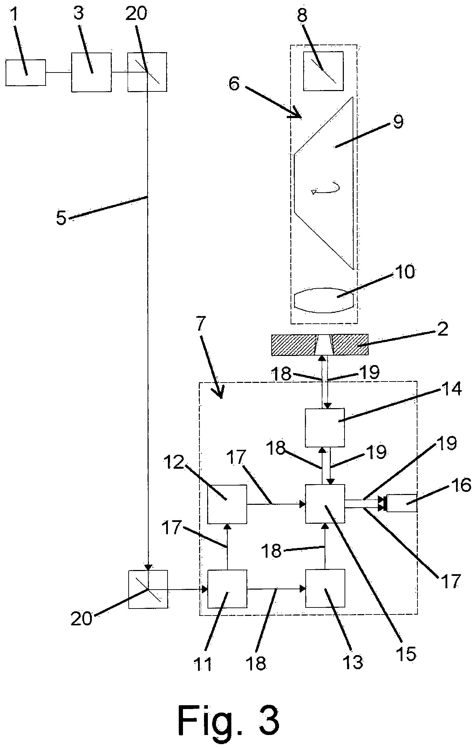

The beam rotator block (9) is rotatably mounted on its longitudinal axis (x), such that the first high-power laser beam (4) describes a circular path whereby a hole is machined in the workpiece (2) by means of rotating the beam rotator block (9). After making the circular cut, the excess material that remains inside the cutting area is separated from the rest of the workpiece (2), a through hole being obtained. When the cutting path is in the form of a divergent cone, as seen in Figure 3, the excess material from machining comes off by gravity, whereas when the cutting path is in the form of a convergent cone, as in the case of Figures 1 and 2, it is necessary to use blowers or other similar means to be able to separates the excess material from the workpiece (2).

It has been envisaged that the beam rotator block (9) consists of a rectangular prism, such as a DOVE prism or an Abbe-König prism, although it can also be formed by a set of mirrors that can be rotated or inclined so that the first high-power laser beam (4) describes a circular path.

Therefore, as seen in the embodiment of Figure 1A, the beam rotator block (9) consists of a galvanometric head formed by two mirrors (21, 22), each of which can be rotated about a respective axis of rotation (y, z), these axes of rotation (y, z) being substantially perpendicular to one another. Therefore, by controlling the rotation of the two mirrors (21, 22), the first high-power laser beam (4) can be guided according to a circular path, allowing making holes on the workpiece (2) by adjusting radius and taper.

The focusing optical block (10) which is used for focusing the first high-power laser beam (4) onto the surface of the workpiece (2) is arranged at the outlet of the beam rotator block (9). In the examples shown in the drawings, a single lens is used for focusing the first high-power laser beam (4), although a set of lenses could be used.

The embodiment of Figure 2 shows the laser emission source (1) which has been regulated by the regulating means (3) to emit on the workpiece (2) the second low-power laser beam (5) which is used for inspecting the workpiece (2) once it has been machined, or for inspecting the piece at regular intervals during the machining cycle.

The second guiding means (7) which are used for guiding the second low-power laser beam (5) consist of a digital holography system whereby three-dimensional topographic images of the workpiece (2) are obtained in the order of milliseconds.

The second guiding means (7) comprise a power control and splitting block (11), optical adaptation blocks (12, 13, 14), a beam splitting block (15) and a receiving block (16).

The power control and splitting block (11) is used for splitting the second low-power laser beam (5) emitted by the laser emission source (1) into two beams, i.e., a reference beam (17)n which is guided directly towards the receiving block (16)n and a target beam (18), which is used for illuminating the machined area of the workpiece (2). The power control and splitting block (11) is also used for adjusting the power required for each of the two beams (17, 18) into which the second low-power laser beam (5) is split. The power control and splitting block (11) can be formed by means of fiber components or by means of optical components, such as lenses, polarized films, or the like.

First and second optical adaptation blocks (12, 13) are arranged at the outlet of the power control and splitting block (11), the first optical adaptation block (12) being used for guiding the reference beam (17), and the second optical adaptation block (13) being used for guiding the target beam (18) from the power control and splitting block (11) towards the beam splitting block (15). The first and second optical adaptation blocks (12, 13) are also used for adjusting the reference beam (17) and the target beam (18), respectively, according to the required dimensional characteristics.

It has been envisaged that the beam splitting block (15) is a beam-splitter which allows the passage of the reference beam (17) so that it reaches the receiving block (16) directly, and allows the passage of the target beam (18) so that it illuminates the workpiece (2). When the target beam (18) illuminates the workpiece (2), a reflected target beam (19) which is guided towards the beam splitting block (15) is created, the latter allowing the reflected target beam (19) to be guided towards the receiving block (16). The third optical adaptation block (14), which allows focusing the target beam (18) on the workpiece (2) and illuminating it, is arranged between the beam splitting block (15) and the workpiece (2) to be inspected.

Therefore, the reference beam (17) and the reflected target beam (19) reach the receiving block (16), which has been envisaged to be a digital CCD or CMOS camera, these two beams (17, 19) interfering with one another to generate a holographic pattern which, by means of digital holography techniques, allows the topographical reconstruction of the machined area of the work surface (2), possible defects that may have been caused while machining the workpiece (2) by boring thus being determined.

As depicted in the embodiment of Figures 1 and 2, to prevent the first and second guiding means (6, 7) from interfering with one another when performing the tasks of machining and inspecting the workpiece (2), it has been envisaged that these guiding means are movable according to at least a horizontal translational movement. Therefore, as seen in Figure 1, when machining is being performed by boring, the first guiding means (6) are located in an upper position with respect to the workpiece (2), where the longitudinal axis (x) is substantially aligned with the center of the hole being machined, the second guiding means (7) being set aside. As seen in Figure 2, when the workpiece (2) is being inspected, the first and second guiding means (6, 7) are moved so that the second guiding means (7) are located in an upper position with respect to the workpiece (2), the first guiding means (6) being set aside.

Another alternative option is to keep the first and second guiding means (6, 7) fixed and to move the workpiece (2) horizontally for being positioned below the first and second guiding means (6, 7), for which purpose the workpiece (2) can be mounted on a moving table having at least a horizontal translational movement in one axis.

Figure 3 shows another embodiment of the invention in which the first guiding means (6) are arranged in an upper position with respect to the workpiece (2), and the second guiding means (7) are arranged in a lower position with respect to the workpiece (2). The workpiece (2) is therefore inspected from the lower part thereof, the need to have to move the first and second guiding means (6, 7) being prevented. In this embodiment, it is necessary to use mirrors (20) for guiding the second low-power laser beam (5) from the laser emission source (1) located in an upper position with respect to the workpiece (2) to the second guiding means (7) located in a lower position with respect to the workpiece (2). It is also possible to drive the second low-power laser beam (5) from the laser emission source (1) to the second guiding means (7), using optical fiber instead of mirrors (20).

## Claims

1. A laser inspection and machining head for machining a workpiece (2) by boring and subsequently inspecting the workpiece (2), comprising a laser emission source (1), and **characterized by**
- a regulating means (3) for regulating the power of the laser emission source (1) for switching alternatively between a first high-power laser beam (4) and a second low-power laser beam (5),
- a first guiding means (6) for guiding the first high-power laser beam (4) on the workpiece (2), and
- a second guiding means (7) for guiding the second low-power laser beam (5) on the workpiece (2), the first high-power laser beam (4) being used for machining the workpiece (2) by boring, and the second low-power laser beam (5) being used for inspecting the workpiece (2).

2. The laser inspection and machining head according to claim 1, **characterized in that** the first guiding means (6) comprise:
- an adjustment block (8) for guiding the first high-power laser beam (4) emitted by the laser emission source (1),
- a beam rotator block (9) rotatably mounted for guiding the first high-power laser beam (4) according to a circular path, and
- a focusing optical block (10) for focusing the first high-power laser beam (4) on the workpiece (2).

3. The laser inspection and machining head according to claim 2, **characterized in that** the beam rotator block (9) of the first guiding means (6) consists of a rectangular prism rotatably mounted on the longitudinal axis (x) thereof.

4. The laser inspection and machining head according to the preceding claim, **characterized in that** the rectangular prism is a DOVE prism or an Abbe-König prism.

5. The laser inspection and machining head according to claim 2, **characterized in that** the beam rotator block (9) of the first guiding means (6) consists of two mirrors (21, 22), each of which is rotatably mounted on a respective axis of rotation (y, z) for guiding the first high-power laser beam (4) according to a circular path.

6. The laser inspection and machining head according to the preceding claim, **characterized in that** the axes of rotation (y, z) of the two mirrors (21, 22) are substantially perpendicular to one another.

7. The laser inspection and machining head according to claim 1, **characterized in that** the second guiding means (7) comprise:
- a power control and splitting block (11) for splitting the second low-power laser beam (5) into a in a reference beam (16) and a target beam (18), and adjusting the power of both reference beam (16) and target beam (18),
- a receiving block (16) for receiving the reference beam (17) and the target beam (18) reflected on the workpiece (2) in the form of a reflected target beam (19),
- a beam splitting block (15) for guiding the target beam (18) towards the workpiece (2), and for guiding the reference beam (17) and the reflected target beam (19) towards the receiving block (16),
- a first optical adaptation block (12) for guiding the reference beam (17) from the power control and splitting block (11) to the receiving block (16),
- a second optical adaptation block (13) for guiding the target beam (18) from the power control and splitting block (11) to the receiving block (16), and
- a third optical adaptation block (14) for focusing the target beam (18) on the workpiece (2).

8. The laser inspection and machining head according to the preceding claim, **characterized in that** the receiving block (16) is a digital CCD or CMOS camera.

9. The laser inspection and machining head according to claim 1, **characterized in that** the first and second guiding means (6, 7) are located in an upper position with respect to the workpiece (2) and have at least a horizontal translational movement for being alternatively located in an upper position substantially aligned with the workpiece (2).

10. The laser inspection and machining head according to claim 1, **characterized in that** the first guiding means (6) are located in an upper position with respect to the workpiece (2), and the second guiding means (7) are located in a lower position with respect to the workpiece (2).

## Patentansprüche

1. Laser-Inspektions- und Bearbeitungskopf zum Bearbeiten eines Werkstücks (2) durch Bohren und nachfolgendes Inspizieren des Werkstücks (2), eine Laseremissionsquelle (1) umfassend, und **gekennzeichnet durch**
- eine Regeleinrichtung (3) zum Regeln der Leistung der Laseremissionsquelle (1) zum alternativen Umschalten zwischen einem ersten Hochleistungslaserstrahl (4) und einem zweiten Niederleistungslaserstrahl (5),
- eine erste Führungseinrichtung (6) zum Führen des ersten Hochleistungslaserstrahls (4) auf dem Werkstück (2), und
- eine zweite Führungseinrichtung (7) zum Führen des zweiten Niederleistungslaserstrahls (5) auf dem Werkstück (2), wobei der erste Hochleistungslaserstrahl (4) zum Bearbeiten des Werkstücks (2) **durch** Bohren genutzt wird, und der zweite Niederleistungslaserstrahl (5) zum Inspizieren des Werkstücks (2) genutzt wird.

2. Laser-Inspektions- und Bearbeitungskopf nach Anspruch 1, **dadurch gekennzeichnet, dass** die erste Führungseinrichtung (6) Folgendes umfasst:
- einen Einstellblock (8) zum Führen des ersten Hochleistungslaserstrahls (4), der von der Laseremissionsquelle (1) abgegeben wird,
- einen Strahldrehblock (9), der drehbar montiert ist, um den ersten Hochleistungslaserstrahl (4) entsprechend einer Kreisbahn zu führen, und
- einen fokussierenden optischen Block (10) zum Fokussieren des ersten Hochleistungslaserstrahls (4) auf dem Werkstück (2).

3. Laser-Inspektions- und Bearbeitungskopf nach Anspruch 2, **dadurch gekennzeichnet, dass** der Strahldrehblock (9) der ersten Führungseinrichtung (6) aus einem rechteckigen Prisma besteht, das drehbar auf der Längsachse (x) davon montiert ist.

4. Laser-Inspektions- und Bearbeitungskopf nach dem vorhergehenden Anspruch, **dadurch gekennzeichnet, dass** das rechteckige Prisma ein DOVE-Prisma oder ein Abbe-König-Prisma ist.

5. Laser-Inspektions- und Bearbeitungskopf nach Anspruch 2, **dadurch gekennzeichnet, dass** der Strahldrehblock (9) der ersten Führungseinrichtung (6) aus zwei Spiegeln (21, 22) besteht, von denen jeder drehbar auf einer jeweiligen Drehachse (y, z) montiert ist, um den ersten Hochleistungslaserstrahl (4) entsprechend einer Kreisbahn zu führen.

6. Laser-Inspektions- und Bearbeitungskopf nach dem vorhergehenden Anspruch, **dadurch gekennzeichnet, dass** die Drehachsen (y, z) der beiden Spiegel (21, 22) im Wesentlichen senkrecht zueinander stehen.

7. Laser-Inspektions- und Bearbeitungskopf nach Anspruch 1, **dadurch gekennzeichnet, dass** die zweite Führungseinrichtung (7) Folgendes umfasst:
- einen Leistungsregelungs- und -aufteilungsblock (11) zum Aufteilen des zweiten Niederleistungslaserstrahls (5) in einen Referenzstrahl (16) und einen Zielstrahl (18), und zum Einstellen der Leistung sowohl des Referenzstrahls (16), als auch des Zielstrahls (18),
- einen Aufnahmeblock (16) zum Aufnehmen des Referenzstrahls (17) und des Zielstrahls (18), die vom Werkstück (2) reflektiert werden, in Form eines reflektierten Zielstrahls (19),
- einen Strahlaufteilungsblock (15) zum Führen des Zielstrahls (18) in Richtung des Werkstücks (2), und zum Führen des Referenzstrahls (17) und des reflektierten Zielstrahls (19) in Richtung des Aufnahmeblocks (16),
- einen ersten optischen Einstellblock (12) zum Führen des Referenzstrahls (17) vom Leistungsregelungs- und -aufteilungsblock (11) zum Aufnahmeblock (16),
- einen zweiten optischen Einstellblock (13) zum Führen des Zielstrahls (18) vom Leistungsregelungs- und -aufteilungsblock (11) zum Aufnahmeblock (16), und
- einen dritten optischen Einstellblock (14) zum Fokussieren des Zielstrahls (18) auf das Werkstück (2).

8. Laser-Inspektions- und Bearbeitungskopf nach dem vorhergehenden Anspruch, **dadurch gekennzeichnet, dass** der Aufnahmeblock (16) eine digitale CCD- oder CMOS-Kamera ist.

9. Laser-Inspektions- und Bearbeitungskopf nach Anspruch 1, **dadurch gekennzeichnet, dass** sich die erste und zweite Führungseinrichtung (6, 7) im Verhältnis zum Werkstück (2) in einer oberen Position befinden, und zumindest eine horizontale Translationsbewegung ausführen, um sich abwechselnd in einer oberen, im Wesentlichen mit dem Werkstück (2) ausgerichteten Position zu befinden.

10. Laser-Inspektions- und Bearbeitungskopf nach Anspruch 1, **dadurch gekennzeichnet, dass** sich die erste Führungseinrichtung (6) im Verhältnis zum Werkstück (2) in einer oberen Position befindet, und sich die zweite Führungseinrichtung (7) im Verhältnis zum Werkstück (2) in einer unteren Position befindet.

## Revendications

1. Tête d'inspection et d'usinage laser pour usiner une pièce à travailler (2) par alésage et ensuite inspecter la pièce à travailler (2), comprenant une source d'émission laser (1), et **caractérisée par**
- des moyens de régulation (3) pour réguler la puissance de la source d'émission laser (1) pour passer en alternance entre un premier faisceau laser haute puissance (4) et un second faisceau laser basse puissance (5),
- des premiers moyens de guidage (6) pour guider le premier faisceau laser haute puissance (4) sur la pièce à travailler (2), et
- des seconds moyens de guidage (7) pour guider le second faisceau laser basse puissance (5) sur la pièce à travailler (2), le premier faisceau laser haute puissance (4) étant utilisé pour usiner la pièce à travailler (2) par alésage, et le second faisceau laser basse puissance (5) étant utilisé pour inspecter la pièce à travailler (2).

2. Tête d'inspection et d'usinage laser selon la revendication 1, **caractérisée en ce que** les premiers moyens de guidage (6) comprennent :
- un bloc d'ajustement (8) pour guider le premier faisceau laser haute puissance (4) émis par la source d'émission laser (1),
- un bloc rotateur de faisceau (9) monté en rotation pour guider le premier faisceau laser haute puissance (4) selon un trajet circulaire, et
- un bloc optique de focalisation (10) pour focaliser le premier faisceau laser haute puissance (4) sur la pièce à travailler (2).

3. Tête d'inspection et d'usinage laser selon la revendication 2, **caractérisée en ce que** le bloc rotateur de faisceau (9) des premiers moyens de guidage (6) est constitué d'un prisme rectangulaire monté en rotation sur son axe longitudinal (x).

4. Tête d'inspection et d'usinage laser selon la revendication précédente, **caractérisée en ce que** le prisme rectangulaire est un prisme de DOVE ou un prisme d'Abbe-König.

5. Tête d'inspection et d'usinage laser selon la revendication 2, **caractérisée en ce que** le bloc rotateur de faisceau (9) des premiers moyens de guidage (6) est constitué de deux miroirs (21, 22), chacun desquels est monté en rotation sur un axe de rotation (y, z) respectif pour guider le premier faisceau haute puissance (4) selon un trajet circulaire.

6. Tête d'inspection et d'usinage laser selon la revendication précédente, **caractérisée en ce que** les axes de rotation (y, z) des deux miroirs (21, 22) sont sensiblement perpendiculaires l'un à l'autre.

7. Tête d'inspection et d'usinage laser selon la revendication 1, **caractérisée en ce que** les seconds moyens de guidage (7) comprennent :
- un bloc de séparation et de commande de puissance (11) pour séparer le second faisceau laser basse puissance (5) en un faisceau de référence (16) et un faisceau cible (18), et ajuster la puissance à la fois du faisceau de référence (16) et du faisceau cible (18),
- un bloc de réception (16) pour recevoir le faisceau de référence (17) et le faisceau cible (18) réfléchis sur la pièce à travailler (2) sous forme d'un faisceau cible réfléchi (19),
- un bloc de séparation de faisceau (15) pour guider le faisceau cible (18) vers la pièce à travailler (2), et pour guider le faisceau de référence (17) et le faisceau cible réfléchi (19) vers le bloc de réception (16),
- un premier bloc d'adaptation optique (12) pour guider le faisceau de référence (17) du bloc de séparation et de commande de puissance (11) au bloc de réception (16),
- un deuxième bloc d'adaptation optique (13) pour guider le faisceau cible (18) du bloc de séparation et de commande de puissance (11) au bloc de réception (16), et
- un troisième bloc d'adaptation optique (14) pour focaliser le faisceau cible (18) sur la pièce à travailler (2).

8. Tête d'inspection et d'usinage laser selon la revendication précédente, **caractérisée en ce que** le bloc de réception (16) est une caméra CCD ou CMOS numérique.

9. Tête d'inspection et d'usinage laser selon la revendication 1, **caractérisée en ce que** les premiers et seconds moyens de guidage (6, 7) sont situés dans une position supérieure par rapport à la pièce à travailler (2) et ont au moins un mouvement de translation horizontal pour être situés en alternance dans une position supérieure sensiblement alignée avec la pièce à travailler (2).

10. Tête d'inspection et d'usinage laser selon la revendication 1, **caractérisée en ce que** les premiers moyens de guidage (6) sont situés dans une position supérieure par rapport à la pièce à travailler (2) et les seconds moyens de guidage (7) sont situés dans une position inférieure par rapport à la pièce à travailler (2).
